# EUROPEAN PATENT APPLICATION

(11) **EP 2 186 817 A1**
(43) Date of publication of application: **19.05.2010**
(21) Application number: 08169185.9
(22) Date of filing: 14.11.2008
(51) Int. Cl.: C07F 17/02, C07B 31/00, C07B 53/00

(54) **Chiral ligands**

(71) Applicant: Solvias AG, 4057 Basel (CH)
(72) Inventor: The designation of the inventor has not yet been filed
(74) Representative: Savatier, Yves

(57) **Abstract**

Process for preparing ligands of the formula (1), 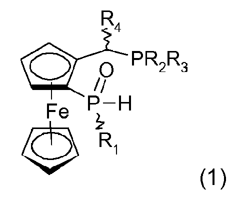 in which
R₁ is C₁-C₈-alkyl, unsubstituted cyclopentyl, cyclohexyl, norbornyl or adamantyl, or cyclopentyl or cyclohexyl, substituted by 1 to 3 C₁-C₄-alkyl or C₁-C₄-alkoxy, or benzyl, phenyl, naphthyl and anthryl which are unsubstituted or substituted by 1 to 3 C₁-C₄-alkyl, C₁-C₄-alkoxy, C₁-C₄-fluoroalkyl or C₁-C₄-fluoroalkoxy, F and Cl,
each of R₂ and R₃ is independently a C-bonded hydrocarbon radical or a heterohydrocarbon radical, and
R₄ is C₁-C₄-alkyl, cyclopentyl, cyclohexyl, phenyl, methylphenyl, methylbenzyl or benzyl,
which comprises (a) stereoselective metallation in ortho position to the amine side-chain of a compound of formula (A) 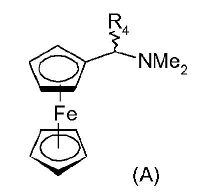 in which R₄ is as defined above,
reaction with a dihalide of formula R₁-PX2 in which R₁ is as defined above and X is Cl or Br, stereoselective hydrolysis to give a compound containing an SPO group, and reaction with a secondary phosphine of formula H-PR₂R₃ in which R₂ and R₃ are as defined above, to give the compounds of formula (1).

New ligands obtained by that process and metal complexes thereof.

## Description

The present invention relates to a new process for the preparation of ligands having a ferrocene backbone with planar chirality to which are bonded a P-chiral secondary phosphine oxide (-P(=O)HR₁) group and a chiral alkylene-secondary phosphine group (-C(R₄)(H)PR₂R₃); to new diastereomers of such bidentate ligands and to metal complexes thereof; and to the use of the metal complexes as catalysts in asymmetric syntheses, particularly in hydrogenation with hydrogen of prochiral organic compounds which contain at least one carbon/carbon or carbon/heteroatom double bond.

Chiral mixed secondary phosphine oxide (SPO) - phosphines have recently been found to be excellent ligands for metal complex catalysts. WO 2007/135179 describes several novel classes of secondary phosphine oxide - phosphine ligands, their preparation and their use in catalytic reactions. The patent document has claims directed to all diastereomers of compounds with the following general formula (I):

secondary phosphine-Q-P*(=O)HR₁

in which
secondary phosphine is a secondary phosphine group with hydrocarbon radicals or heterohydrocarbon radicals as substituents;
Q is a bivalent bisaryl or bisheteroaryl radical with an axial chiral centre to which the two phosphorus atoms are bonded in the ortho positions to the bisaryl or bisheteroaryl bridge bond, or Q is a bivalent ferrocenyl radical with a planar chiral centre or without a planar chiral centre, to which the phosphorus atom of the secondary phosphine is bonded directly or via a C₁-C₄-carbon chain to a cyclopentadienyl ring, the -P*(=O)HR₁ group is bonded either on the same cyclopentadienyl ring in ortho position to the bonded secondary phosphine or on the other cyclopentadienyl ring;
P* is a chiral phosphorus atom, and
R₁ is a hydrocarbon radical, a heterohydrocarbon radical or a ferrocenyl radical, where R₁ is a ferrocenyl radical with a planar chiral centre when Q as a ferrocenyl radical does not have a planar chiral centre.

The following important class of ligands that falls under this general formula (I) is described and claimed in WO 2007/135179 (see that document, pages 18-19 and Claim 5). It has the following general structure (only one form of the planar chirality is drawn here): 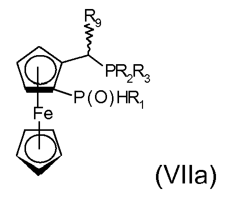 in which
R₁ is C₁-C₈-alkyl, unsubstituted cyclopentyl or cyclohexyl or cyclopentyl or cyclohexyl substituted by 1 to 3 C₁-C₄-alkyl or C₁-C₄-alkoxy, or benzyl and phenyl which are unsubstituted or substituted by 1 to 3 C₁-C₄-alkyl, C₁-C₄-alkoxy, C₁-C₄-fluoroalkyl or C₁-C₄-fluoroalkoxy, F and Cl;
R₂ and R₃ are each independently a hydrocarbon radical which has 1 to 18 carbon atoms and is unsubstituted or substituted by C₁-C₆-alkyl, trifluoromethyl, C₁-C₆-alkoxy, trifluoromethoxy, (C₁-C₄-alkyl)₂amino, (C₆H₅)₃Si, (C₁-C₁₂-alkyl)₃Si, halogen, and/or O heteroatoms, and
R₉ is C₁-C₄-alkyl, cyclopentyl, cyclohexyl, phenyl, methylphenyl, methylbenzyl or benzyl.

Where R₂ and R₃ are identical, ligands of formula (VIIa) have three elements of chirality (chirality in the sidechain, planar chirality at the ferrocene and P-chirality of the secondary phosphine oxide (SPO) group). As a consequence 8 different stereoisomers (4 enantiomeric pairs of diastereomers) of these ligands can be envisaged.

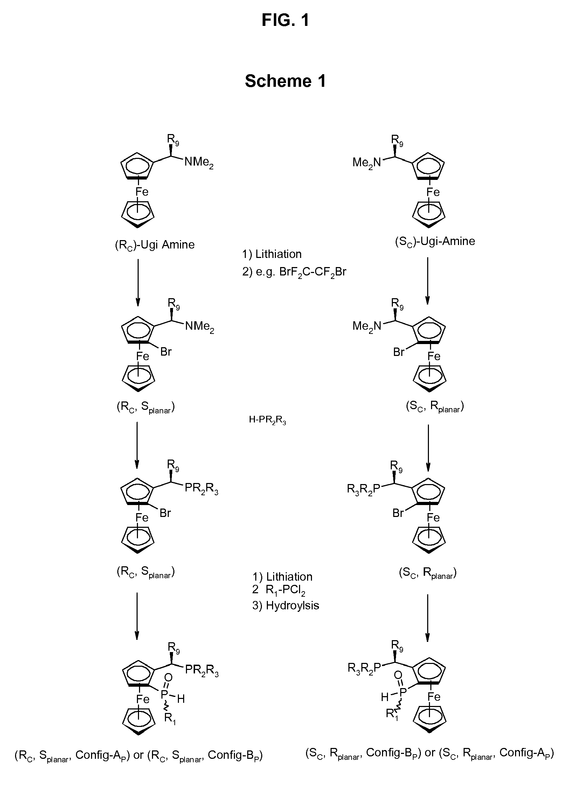

WO 2007/135179 describes a 3-step method of preparation of a ligand of general formula (I) (see Figure 1: Scheme 1) which includes the steps of
- (a) stereoselective preparation of 1-[(dimethylamino)eth-1-yl]-2-bromo-ferrocene by known methods,
- (b) exchange of the dimethylamino group of the above compound against a secondary phosphine,
- (c) metallating the resulting product, e.g. with lithium alkyl, then reacting the metallated compound with a dihalophosphine, and finally forming the -P(=O)HR₁ group by hydrolysis.

That method is used in Examples A1, A2, A7, A8 and A9 for preparing ligands L1, L2, L8, L9 and L10, each of which is of formula (VIIa) wherein R₂ and R₃ are identical and R₉ is methyl. That method leads exclusively or highly predominantly to only one enantiomeric pair of diastereomers (no second diastereoisomer is reported to be detected), the absolute configuration of which at the phosphine oxide moiety has not been determined.

Scheme 1 (see Figure 1) shows the three-step synthesis of the stereoisomers that is disclosed in that document, the non-determined absolute configuration on the SPO moiety being called "Config-B_{P}" and "Config-A_{P}" for the two enatiomeric pairs of epimers, respectively.

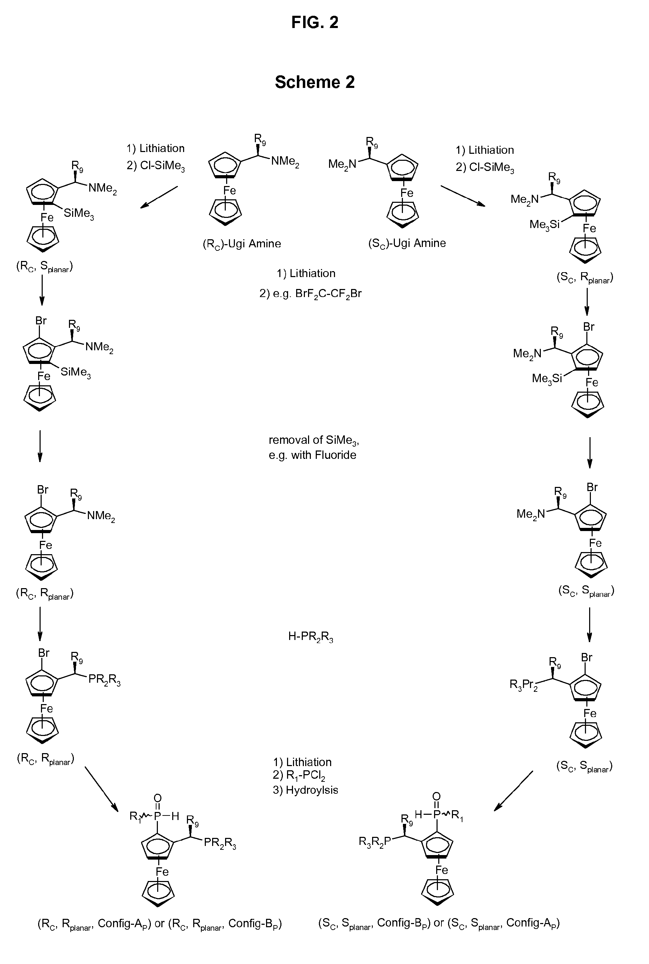

Another enantiomeric pair of diastereoisomers with a different planar configuration may be obtained by a 5-step method comprising first inverting the planar chirality using conventional chemistry and then performing the three step synthesis method described in WO 2007/135179, as represented in Scheme 2 (see Figure 2).

The control of the stereochemistry of the chiral centre in the sidechain (R_{C} or S_{C}) and of the planar chirality at the ferrocene (Rₚₗₐₙₐᵣ or Sₚₗₐₙₐᵣ) are well known in the art [see e.g. Ferrocenes, eds. A. Togni, T. Hayashi, VCH Weinheim 1995].

It is to be noted that in the present application for the description of the planar chirality, the stereochemical nomenclature of Schlögl is used; see K. Schlögl, Top. Stereochem. 1 (1967) 39-91 and H. Falk, K. Schlögl, Monatsh. Chem. 96 (1965) 1065-80.

In contrast nothing is known about the control of the stereochemistry of the secondary phosphine oxide (SPO) in such molecules.

The formation of the chiral SPO as described in WO 2007/135179 (see Figure 1: Scheme 1) is highly stereoselective and apparently yields exclusively or highly predominantly only one enantiomeric pair of diastereoisomers of the possible two enantiomeric pairs of diastereomers starting from a given planar configuration and a given configuration of the side chain: only one enantiomeric pair of diastereoisomers of a such a ferrocene-SPO ligand (the absolute configuration of which at the phosphine oxide moiety has not been determined) was isolated and characterized in the Examples A1, A2, A7, A8 and A9 of WO 2007/135179.

To date, it is still not possible to forecast which metal complexes with which ligands under which reaction conditions for which unsaturated substrates give rise to practically usable hydrogenation results with regard to the catalytic activity and stereoselectivity. Therefore, there is a great need for further ligands which have a phosphine and secondary phosphine oxide group bonded on the backbone which are of industrial relevance, i.e. which can be prepared in a simple and economic manner and which are also suitable as ligands for metal complexes and give excellent results as asymmetric catalysts.

The industrial relevance of chiral ligands rises with diminishing costs and one of the most important cost factors is the number of required steps for their synthesis. As mentioned above, the ligands described in WO 2007/135179 were prepared in a three-step synthesis. It would be of great commercial value, if stereoisomers of such ligands could be accessed in a synthesis of less than three steps.

It has now been found that, surprisingly, ligands with following general structure (only one form of the planar chirality is drawn here): 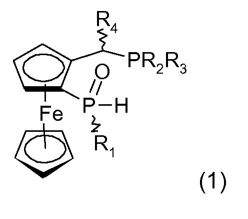 in which
R₁ is C₁-C₈-alkyl, unsubstituted cyclopentyl, cyclohexyl, norbornyl or adamantyl, or cyclopentyl or cyclohexyl, substituted by 1 to 3 C₁-C₄-alkyl or C₁-C₄-alkoxy, or benzyl, phenyl, naphthyl and anthryl which are unsubstituted or substituted by 1 to 3 C₁-C₄-alkyl, C₁-C₄-alkoxy, C₁-C₄-fluoroalkyl or C₁-C₄-fluoroalkoxy, F and Cl, R₂ and R₃ are independently a C-bonded hydrocarbon radical or a heterohydrocarbon radical,
R₄ is C₁-C₄-alkyl, cyclopentyl, cyclohexyl, phenyl, methylphenyl, methylbenzyl or benzyl,

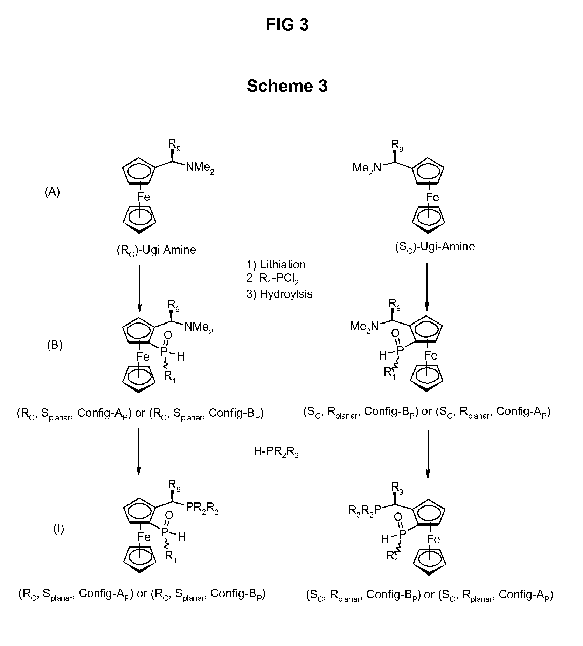

(a) can be prepared in a new, highly economic two-step synthesis instead of the three-step synthesis described in WO 2007/135179, using the route described in Scheme 3 (see Figure 3) (note that in both syntheses the formation of the chlorophosphine and its hydrolysis are considered as one step because the chlorophosphine is further reacted without any work up),
   and that
(b) the synthesis can be directed to be highly diastereoselective, the diastereoselectivity for the preparation of intermediate (B) (hence the diastereoselectivity for the preparation of the ligand of formula (1)) strongly depending on the hydrolysis conditions,
(c) the SPO in the intermediate (B) withstands high temperatures in acetic acid (the conditions used for the exchange of the diaminogroup in intermediate (B) by secondary phosphine) and does not react in an undesired way,
(d) depending on the type of R₁ used and the hydrolysis conditions, this new synthetic route can yield as the main product the diastereomers with the opposite configuration at the SPO compared with the synthetic route described in WO 2007/135179, and
(e) the diastereomeric form of these ligands of formula (1) predominantly obtained by the new two-step synthesis in many cases significantly outperforms the diastereomers of formula (1) obtained by the three-step synthesis disclosed in WO 2007/135179.

The invention thus firstly provides a new process for preparing compounds of the formula (1), 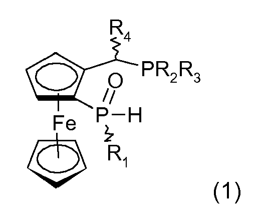 in which
R₁ is C₁-C₈-alkyl, unsubstituted cyclopentyl, cyclohexyl, norbornyl or adamantyl, or cyclopentyl or cyclohexyl, substituted by 1 to 3 C₁-C₄-alkyl or C₁-C₄-alkoxy, or benzyl, phenyl, naphthyl and anthryl which are unsubstituted or substituted by 1 to 3 C₁-C₄-alkyl, C₁-C₄-alkoxy, C₁-C₄-fluoroalkyl or C₁-C₄-fluoroalkoxy, F and Cl, each of R₂ and R₃ is independently a C-bonded hydrocarbon radical or a heterohydrocarbon radical,
R₄ is C₁-C₄-alkyl, cyclopentyl, cyclohexyl, phenyl, methylphenyl, methylbenzyl or benzyl,
which includes the following steps:
   (a) stereoselective metallation in ortho position to the amine side-chain of a compound of formula (A) 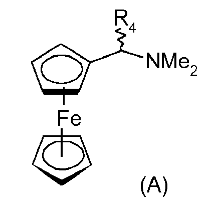
      in which R₄ is as defined above,
      reaction with a dihalide of formula R₁-PX2 in which R₁ is as defined above and X is Cl or Br,
      to give a compound of formula (B) 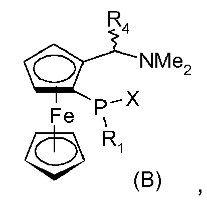 and
      stereoselective hydrolysis of the compound of formula (B) to give a compound of formula (C) containing an SPO group 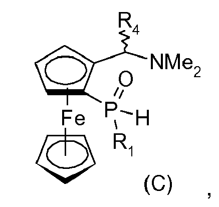 and
   (b) reaction of the compound of formula (C) with a secondary phosphine of formula H-PR₂R₃ in which R₂ and R₃ are as defined above,
to give the compounds of formula (1).

By way of explanation, it should be noted that throughout the present application including in the claims:
- the compounds of the formula (1) also include the tautomeric forms in which the -P*(OH)R₁ group is represented as -P*(=O)HR₁. In the two tautomeric forms, the phosphorus atom is asymmetric and chiral,
- in the drawing of the general formulae only one of the two possible forms of planar chirality are represented, but both are meant to be encompassed.

In the compound of formula (A) used as starting material, R₄ is C₁-C₄-alkyl, cyclopentyl, cyclohexyl, phenyl, methylphenyl, methylbenzyl or benzyl.

Preferably R₄ is methyl or phenyl, most preferably methyl.

### Stereoselective metallation in ortho position to the amine side chain

The metallation agent is preferably an alkyllithium compound. The stereoselective metallation of ferrocene compounds with alkyllithium compounds is well known and can be performed as described in Phosphorous Ligands in Asymmetric Catalysis, ed. A. Börner, Wiley-VCH Weinheim 2008 or Ferrocenes, eds. A. Togni, T. Hayashi, Wiley-VCH Weinheim 1995 and the literature cited therein.

The alkyl in the alkyllithium can contain, for example, from 1 to 4 carbon atoms. Methyllithium and n-butyllithium, s-butyllithium or t-butyllithium is frequently used.

The reaction is advantageously carried out at low temperatures, for example from -100 to 40°C, preferably from -80 to 0°C. After addition of the metallating agent, the temperature may be allowed to rise to room temperature. The reaction time is from about 1 to 20 hours. The reaction is advantageously carried out under inert protective gases, for example nitrogen or noble gases such as helium or argon.

The reaction is advantageously carried out in the presence of inert solvents. Such solvents can be used either alone or as a combination of at least two solvents. Examples of suitable solvents are aliphatic, cycloaliphatic and also open-chain or cyclic ethers. Specific examples are petroleum ether, pentane, hexane, heptane, cyclohexane, methylcyclohexane, diethyl ether, dibutyl ether, tert-butyl methyl ether, ethylene glycol dimethyl or tetrahydrofuran and dioxane.

In a preferred embodiment, the metallation agent is s-BuLi or n-BuLi and the solvent is diethyl ether, tert-butyl methyl ether or tetrahydrofurane.

Reaction with a dihalide of formula R₁-PX2

In the dihalide of formula R₁-PX2,
X is Cl or Br, preferably Cl, and
R₁ is C₁-C₈-alkyl, unsubstituted cyclopentyl, cyclohexyl, norbornyl or adamantyl, or cyclopentyl or cyclohexyl, substituted by 1 to 3 C₁-C₄-alkyl or C₁-C₄-alkoxy, or benzyl, phenyl, naphthyl and anthryl which are unsubstituted or substituted by 1 to 3 C₁-C₄-alkyl, C₁-C₄-alkoxy, C₁-C₄-fluoroalkyl or C₁-C₄-fluoroalkoxy, F and Cl,

Preferably R₁ is t-butyl, isopropyl, cyclohexyl, cyclopentyl, ethyl, phenyl, benzyl, ortho-tolyl, ortho-anisyl, meta-anisyl, para-anisyl, p-trifluorophenyl, 2,5-ditrifluoromethylphenyl, 3,5-dimethoxyphenyl, or 3,5-dimethoxy-4-methylphenyl,

Most preferably R₁ is t-butyl or phenyl.

The reaction mixture containing the metallated ferrocene is cooled to -80 to 0°C (preferred: -78 to -30°C) and added to a solution of R₁-PX2 in an inert solvent which is stirred at a temperature between -80°C and 0°C. After addition, cooling may be removed and the reaction stirred for additional 0.5 to 24 hours until the reaction is complete. If R₁ is large (e.g. t-Butyl), R₁-PX₂ may also be added to the metallated ferrocene.

The solvents in this reaction can be used either alone or as a combination of at least two solvents. Examples of suitable solvents are aliphatic, cycloaliphatic and aromatic hydrocarbons and also open-chain or cyclic ethers. Specific examples are petroleum ether, pentane, hexane, cyclohexane, methylcyclohexane, benzene, toluene, xylene, diethyl ether, dibutyl ether, tert-butyl methyl ether, ethylene glycol dimethyl or tetrahydrofuran and dioxane.

### Stereoselective hydrolysis of compound of formula (B)

The resulting reaction mixture with the compound of formula (B) is then hydrolyzed by methods such as:
- mixing the reaction mixture with water, or
- mixing the reaction mixture or with water containing an acid, or
- mixing the reaction mixture with water containing a base,
whereby the phosphinehalide (B) can be added to the hydrolyzing medium or the hydrolyzing medium to the phosphinehalide (B).

Suitable acids are hydrochloric acid, sulphuric acid, formic acid, acetic acid, trifluoroacetic acid, methylsulfonic acid and benzenecarboxylic acid.

Suitable bases are NaOH, KOH, LiOH, Na₂CO₃, K₂CO₃ or tertiary amines such as triethylamine, di-isoproypylethylamine, N,N-dimethylaniline and pyridine.

The concentration of the acid or of the base is suitably 0.01 - 5 M. The hydrolysis is suitably carried out at a temperature in a range 0°C to 90°C, preferably 0-25°C.

Alternatively, the phosphinehalide (B) may also be reacted with a primary or secondary amine or an alcohol in presence of a base to form a aminophosphine or a phosphinite, which then can be hydrolyzed by the method described above or by reaction with a neat carboxylic acid such as formic acid or acetic acid.

The hydrolysis conditions influence the stereochemistry of the SPO group in compounds of formula (C). The ratio of the epimers formed strongly depends on the pH of the hydrolysis medium.

Interesting new compounds of formula (1) have been obtained by performing hydrolysis in a basic aqueous solvent containing a tertiary amine, such as e.g. triethylamine, di-isoproypylethylamine, N,N-dimethylaniline and pyridine, in particular triethylamine.

In a preferred embodiment, hydrolysis is performed by adding the reaction mixture containing the compound of formula (B) to a mixture of triethylamine and water, in particular a 1 : 10 mixture of triethylamine and water, at a temperature between 0°C and room temperature.

The resulting intermediate (C) may be worked up by classical laboratory methods such as extraction or, if (C) or a salt of (C) is a solid, by precipitation or crystallization. Optionally intermediate (C) may be purified by chromatography or, if (C) or a salt of (C) is a solid, by crystallization of (C) or of a salt, e.g. an ammonium salt, of (C).

### Reaction of a compound of formula (C) with a secondary phosphine of formula H-PR₂R₃ (step (b))

The introduction of the secondary phosphine of formula H-PR₂R₃ may be performed using the methods and conditions well known in the art (see e.g. "Phosphorous Ligands in Asymmetric Catalysis", ed. A. Börner, Wiley-VCH Weinheim 2008 or Ferrocenes, eds. A. Togni, T. Hayashi, Wiley-VCH Weinheim 1995 and the literature cited therein).

In a preferred embodiment, a mixture of one mole equivalent of compound of formula (C) and 1 - 1.2 mole equivalent of the secondary phosphine H-PR₂R₃ is stirred in acetic acid at a temperature of 60 to 140°C, preferably 80 to 120°C, until the reaction is complete. The reaction time ranges from 3 to 48 hours, usually overnight.

The compounds of formula (1) obtained can be isolated and purified using standard laboratory methods such as extraction, precipitation, crystallization and chromatography.

In the secondary phosphine of formula H-PR₂R₃ each of R₂ and R₃ is independently a C-bonded hydrocarbon radical or a heterohydrocarbon radical.

Preferably R₁ and R₂ are identical C-bonded hydrocarbon radicals or heterohydrocarbon radicals.

The C-bonded hydrocarbon radicals and heterohydrocarbon radicals R₂ and R₃ may be unsubstituted or substituted and/or contain heteroatoms selected from the group of O, S and N. They may contain 1 to 30, preferably 1 to 18 and more preferably 1 to 12 carbon atoms. The C-bonded hydrocarbon radical may be selected from the group of linear or branched C₁-C₁₈-alkyl; unsubstituted or C₁-C₆-alkyl- or C₁-C₆-alkoxy-substituted C₅-C₁₂-cycloalkyl or C₅-C₁₂-cydoalkyl-CH₂₋; phenyl, naphthyl, furyl or benzyl; or halogen-, C₁-C₆-alkyl-, trifluoromethyl-, C₁-C₆-alkoxy-, trifluoromethoxy-, (C₆H₅)₃Si, (C₁-C₁₂-alkyl)₃Si or secondary amino-substituted phenyl, naphthyl, furyl or benzyl.

In a preferred embodiment each of R₂ and R₃ is independently a C-bonded hydrocarbon radical or an O-atom containing heterohydrocarbon radical which has 1 to 18 carbon atoms and is unsubstituted or substituted by C₁-C₆-alkyl, trifluoromethyl, C₁-C₆-alkoxy, trifluoromethoxy, (C₁-C₄-alkyl)₂amino, (C₆H₅)₃Si, (C₁-C₁₂-alkyl)₃Si, halogen.

Examples of R₂, R₃ as alkyl, which preferably contains 1 to 6 carbon atoms, are methyl, ethyl, n-propyl, i-propyl, n-butyl, i-butyl, t-butyl, and the isomers of pentyl and hexyl. Examples of R₂, R₃ as optionally alkyl-substituted cycloalkyl are cyclopentyl, cyclohexyl, methyl- and ethylcyclohexyl, and dimethylcyclohexyl. Examples of R₂, R₃ as alkyl- and alkoxy-substituted phenyl and benzyl are methylphenyl, dimethylphenyl, trimethylphenyl, ethylphenyl, methylbenzyl, methoxyphenyl, dimethoxyphenyl, trimethoxyphenyl, trifluoromethylphenyl, bis(trifluoromethyl)phenyl, tris(trifluoromethyl)phenyl, trifluoromethoxyphenyl, bis(trifluoromethoxy)phenyl, fluoro- and chlorophenyl and 3,5-dimethyl-4-methoxyphenyl.

Preferably R₂ and R₃ are identical C-bonded radicals selected from the group of C₁-C₆-alkyl, unsubstituted cyclopentyl or cyclohexyl or cyclopentyl or cyclohexyl substituted by 1 to 3 C₁-C₄-alkyl or C₁-C₄-alkoxy, benzyl and particularly phenyl, which are unsubstituted or substituted by 1 to 3 C₁-C₄-alkyl, C₁-C₄-alkoxy, C₁-C₄-fluoroalkyl or C₁-C₄-fluoroalkoxy, F and Cl.

In a preferred embodiment, R₂ and R₃ are each C-bonded radicals selected from the group of linear or branched C₁-C₆-alkyl, unsubstituted cyclopentyl or cyclohexyl or cyclopentyl or cyclohexyl substituted by one to three C₁-C₄-alkyl or C₁-C₄-alkoxy, furyl, unsubstituted benzyl or benzyl substituted by one to three C₁-C₄-alkyl or C₁-C₄-alkoxy, and in particular unsubstituted phenyl or phenyl substituted by one to three F, Cl, C₁-C₄-alkyl, C₁-C₄-alkoxy, C₁-C₄-fluoroalkyl or C₁-C₄-fluoroalkoxy.

More preferably, R₂ and R₃ are each radicals selected from the group of C₁-C₆-alkyl, cyclopentyl, cyclohexyl, furyl and unsubstituted phenyl or phenyl substituted by one to three F, Cl, C₁-C₄-alkyl, C₁-C₄-alkoxy and/or C₁-C₄-fluoroalkyl.

The secondary phosphine of formula H-PR₂R₃ may be a cyclic secondary phosphine, for example those of the following formulae: 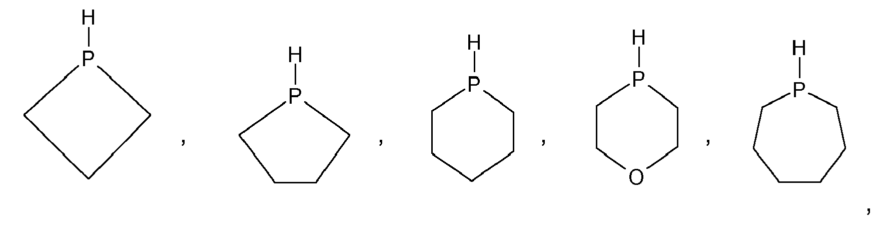 which are unsubstituted or mono- or polysubstituted by C₁-C₈-alkyl, C₄-C₈-cydoalkyl, C₁-C₆-alkoxy, C₁-C₄-alkoxy-C₁-C₄-alkyl, phenyl, C₁-C₄-alkyl- or C₁-C₄-alkoxyphenyl, benzyl, C₁-C₄-alkyl- or C₁-C₄-alkoxybenzyl, benzyloxy, C₁-C₄-alkyl- or C₁-C₄-alkoxybenzyloxy or C₁-C₄-alkylidenedioxy.

The substituents may be bonded in one or both α positions to the phosphorus atom in order to introduce chiral carbon atoms. The substituents in one or both α positions are preferably C₁-C₄-alkyl or benzyl, for example methyl, ethyl, n- or i-propyl, benzyl or -CH₂-O-C₁-C₄-alkyl or -CH₂-O-C₆-C₁₀-aryl.

Substituents in the β,γ positions may, for example, be C₁-C₄-alkyl, C₁-C₄-alkoxy, benzyloxy, or -O-CH₂-O-, -O-CH(C₁-C₄-alkyl)-O- and -O-C(C₁-C₄-alkyl)₂-O-. Some examples are methyl, ethyl, methoxy, ethoxy, -O-CH(methyl)-O- and -O-C(methyl)₂-O-.

Depending on the type of substitution, and number of substituents, the cyclic secondary phosphine may be C-chiral, P-chiral or C- and P-chiral.

An aliphatic 5- or 6-membered ring or benzene may be fused onto two adjacent carbon atoms in the radicals of the above formulae.

The cyclic secondary phosphine may, for example, correspond to the formulae (only one of the possible diastereomers is given) 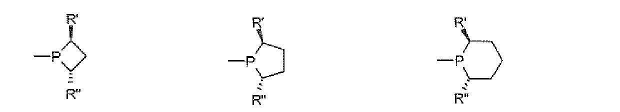 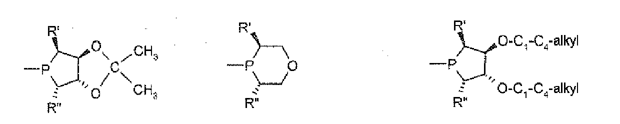 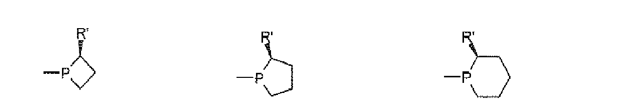 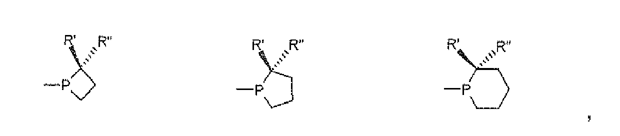 in which
the R' and R" radicals are each C₁-C₄-alkyl, for example methyl, ethyl, n- or i-propyl, benzyl, or -CH₂-O-C₁-C₄-alkyl or -CH₂-O-C₆-C₁₀-aryl, and R' and R" are identical or different from one another.

In a preferred embodiment of the invention the secondary phosphine of formula HPR₂R₃ is a noncyclic secondary phosphine selected from the group of H-P(C₁-C₆-alkyl)₂, H-P(C₅-C₈-cycloalkyl)₂, H-P(C₇-C₈-bicycloalkyl)₂, H-P(o-furyl)₂, H-P(C₆H₅)₂, H-P[2-(C₁-C₆-alkyl)C₆H₄]₂, H-P[3-(C₁-C₆-alkyl)C₆H₄]₂, H-P[4-(C₁-C₆-alkyl)C₆H₄]₂, H-P[2-(C₁-C₆-alkoxy)C₆H_{4]2}, H-P[3-(C₁-C₆-alkoxy)C₆H₄]₂, H-P[4-(C₁-C₆-alkoxy)C₆H₄]₂, H-P[2-(trifluoromethyl)C₆H₄]₂, H-P[3-(trifluoromethyl)C₆H₄]₂, H-P[4-(trifluoromethyl)C₆H₄]₂, H-P[3,5-bis(trifluoromethyl)C₆H₃]₂, H-P[3,5-bis(C₁-C₆-alkyl)₂C₆H₃]₂, H-P[3,5-bis(C₁-C₆-alkoxy)₂C₆H₃]₂ and H-P[3,5-bis(C₁-C₆-alkyl)2-4-(C₁-C₆-alkoxy)C₆H₂]₂, or a cyclic phosphine selected from the group of 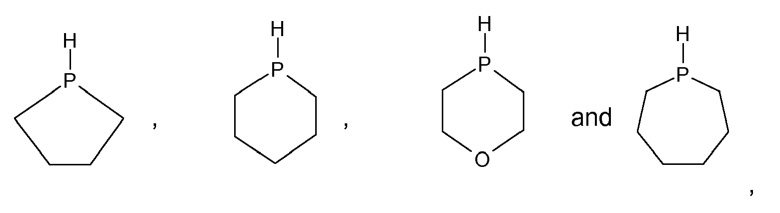 which are unsubstituted or mono- or polysubstituted by C₁-C₄-alkyl, C₁-C₄-alkoxy, C₁-C₄-alkoxy-C₁-C₂-alkyl, phenyl, benzyl, benzyloxy or C₁-C₄-alkylidenedioxy.

Some specific examples are H-P(CH₃)₂, H-P(i-C₃H₇)₂, H-P(n-C₄H₉)₂, H-P(i-C₄H₉)₂, H-P(t-C₄H₉)₂, H-P(C₅H₉), -P(C₆H₁₁)₂, H-P(norbornyl)₂, H-P(o-furyl)₂, H-P(C₆H₅)₂, H-P[2-(methyl)C₆H₄]₂, H-P[3-(methyl)C₆H₄]₂, H-P[4-(methyl)C₆H₄]₂, H-P[2-(methoxy)C₆H₄]₂, H-P[3-(methoxy)C₆H₄]₂, H-P[4-(methoxy)C₆H₄]₂, H-P[3-(trifluoromethyl)C₆H₄]₂, H-P[4-(trifluoromethyl)C₆H₄]₂, H-P[3,5-bis(trifluoromethyl)C₆H₃]₂, H-P[3,5-bis(methyl)₂C₆H₃]₂, H-P[3,5-bis(methoxy)₂C₆H₃]₂ and H-P[3,5-bis(methyl)₂-4-(methoxy)C₆H₂]₂, and those where the -PR₂R₃ has one of the following formulae 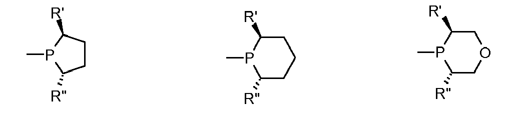 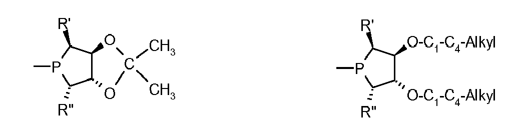 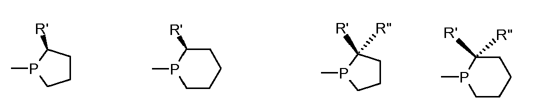 in which
R' is methyl, ethyl, methoxy, ethoxy, phenoxy, benzyloxy, methoxymethyl, ethoxymethyl or benzyloxymethyl and R" independently has the same definition as R' and is different from R'.

The invention secondly provides compounds of the formula (1) having at least three chiral elements in the form of mixtures of highly enriched or pure diastereomers, namely planar chirality, chiral side chain and P-chiral secondary phosphineoxide. Some of those compounds are new, having a different stereochemistry than the compounds disclosed in WO 2007/135179, and have unexpected interesting properties.

The invention thus concerns new compounds of formula (1 a) 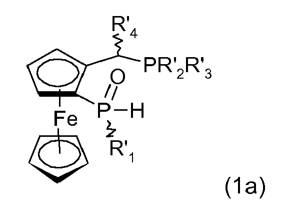 having the following absolute configuration (R_{C}, Sₚₗₐₙₐᵣ, S_{P(SPO)}) or (Sc, Rₚₗₐₙₐᵣ, R_{P(SPO)}) in which
R'₁ is t-butyl
R'₂ and R'₃ are each independently a C-bonded hydrocarbon or heterohydrocarbon radical which has 1 to 18 atoms, the optional heteroatoms being one or more oxygen atoms, the hydrocarbon or heterohydrocarbon radical being unsubstituted or substituted by 1 to 3 of the groups C₁-C₆-alkyl, trifluoromethyl, C₁-C₆-alkoxy, trifluoromethoxy, (C₁-C4-alkyl)₂amino, (C₆H₅)₃Si, (C₁-C₁₂-alkyl)₃Si and/or halogen,
   and
R'₄ is methyl or phenyl.

Those compounds are ligands having interesting catalytic properties.

Interesting examples of -PR'₂R'₃ are -P(CH₃)₂, -P(i-C₃H₇)₂, -P(n-C₄H₉)₂, -P(i-C₄H₉)₂, -P(t-C₄H₉)₂, -P(C₅H₉), -P(C₆H₁₁)₂, -P(norbornyl)₂, -P(o-furyl)₂, -P(C₆H₅)₂, P[2-(methyl)C₆H₄]₂, P[3-(methyl)C₆H₄]₂, -P[4-(methyl)C₆H₄]₂, -P[2-(methoxy)C₆H₄]₂, -P[3-(methoxy)C₆H₄]₂, -P[4-(methoxy)C₆H₄]₂, -P[3-(trifluoromethyl)C₆H₄]₂, -P[4-(trifluoromethyl)C₆H₄]₂, -P[3,5-bis(trifluoromethyl)C₆H₃]₂, -P[3,5-bis(methyl)₂C₆H₃]₂, -P[3,5-bis(methoxy)₂C₆H₃]₂ and -P[3,5-bis(methyl)₂-4-(methoxy)C₆H₂]₂, and the groups of the formulae 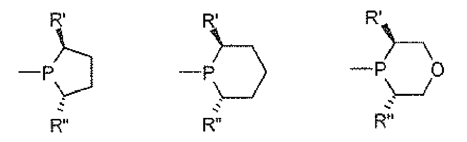 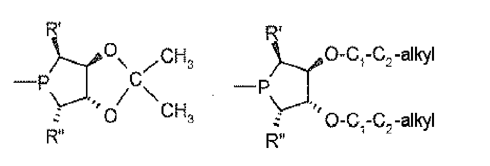 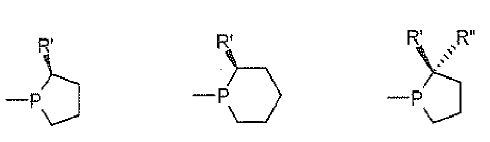 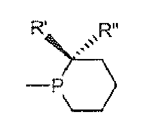 in which
R' is methyl, ethyl, methoxy, ethoxy, phenoxy, benzyloxy, methoxymethyl, ethoxymethyl or benzyloxymethyl and R" independently has the same definition as R' and is different from R'.

Preferably R'₂ and R'₃ are identical.

Preferably -PR'₂R'₃ is selected from -P(t-C₄H₉)₂, -P(C₅H₉)₂, -P(C₆H₁₁)₂, -P(o-furyl)₂, -P(C₆H₅)₂, -P[4-(methoxy)C₆H₄]₂,-P[4-(trifluoromethyl)C₆H₄]₂, P[3,5-bis(trifluoromethyl)C₆H₃]₂, and -P[3,5-bis(methyl)₂-4-(methoxy)C₆H₂]₂.

Most preferably -PR'₂R'₃ is selected from -P(t-C₄H₉)₂ and -P(C₆H₅)₂.

R'₄ is preferably methyl.

Particularly interesting compounds of formula (1 a) are 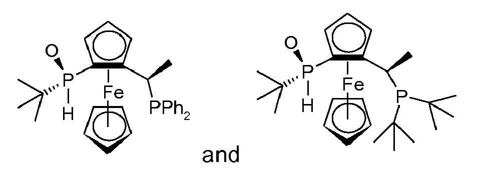 and their corresponding enantiomers

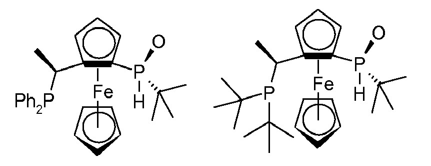

The invention also concerns new compounds of formula (1 b) 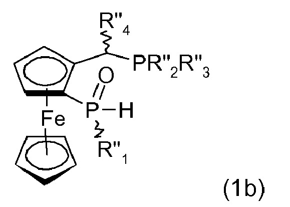 having an absolute configuration in the secondary phosphineoxide moiety different from that of ligands L2 and L8 disclosed in WO 2007/135179,
in which
R"₁ is phenyl.
R"₂ and R"₃ are each independently a C-bonded hydrocarbon or heterohydrocarbon radical which has 1 to 18 atoms, the optional heteroatoms being one or more oxygen atoms, the hydrocarbon or heterohydrocarbon radical being unsubstituted or substituted by 1 to 3 of the groups C₁-C₆-alkyl, trifluoromethyl, C₁-C₆-alkoxy, trifluoromethoxy, (C₁-C₄-alkyl)₂amino, (C₆H₅)₃Si, (C₁-C₁₂-alkyl)₃Si and/or halogen, and
R"₄ is methyl or phenyl.

Those compounds are also ligands having interesting catalytic properties.

The preferences mentioned above for R'₂ and R'₃ also apply to R"₂ and R"₃.

Most preferably -PR'₂R'₃ is -P(t-C₄H₉)₂.

Preferably R"₄ is methyl.

A particularly interesting compound of formula (1 b) is the compound A3' (having the following ¹H-NMR (C₆D₆; 300MHz) characteristic signals:
7.8 (d, J=472Hz, 1H), 7.87-7.96 (m, 2H), 7.09-7.14 (m, 3H), 4.29 (s, 5H), 4.13 (s, 1H), 3.99-4.07 (m, 3H), 1,67 (dd, 3H), 1.32 (d, 9H), 0.86(d, 9H), ³¹P-NMR (C₆D₆, 121MHz, ¹H-decoupled): 51.8 (d, J=∼4 Hz), 21.2 (d, J=∼4 Hz).

The invention further provides metal complexes of transition metals of the transition groups of the Periodic Table of the Elements with a compound of the formula (1 a) or (1 b) as a ligand.

Among the transition metals, metals are more preferably selected from the group of Fe, Co, Ni, Cu, Ag, Au, Ru, Rh, Pd, Os, Ir. Very particularly preferred metals are Cu, Pd, Ru, Rh, Ir and Pt. Examples of organic syntheses are, as well as asymmetric hydrogenations of prochiral unsaturated organic compounds, amine couplings, enantioselective ring openings and hydrosilylations.

Particularly preferred metals are ruthenium, rhodium and iridium.

Depending on the oxidation number and coordination number of the metal atom, the metal complexes may contain further ligands and/or anions. The metal complexes may also be cationic metal complexes. Such analogous metal complexes and their preparation have been described many times in the literature.

The metal complexes may, for example, correspond to the following general formulae (XIV) and (XV):

A₁MeLₙ (XIV),

(A₁MeLₙ)^{(z+)}(E⁻)_{z} (XV),

in which A₁ is a compound of the formula (1 a) or (1 b),
L are identical or different monodentate, anionic or nonionic ligands, or two L are identical or different bidentate, anionic or nonionic ligands;
n is 2, 3 or 4 when L is a monodentate ligand, or n is 1 or 2 when L is a bidentate ligand;
z is 1, 2 or 3;
Me is a metal selected from the group Rh, Ir and Ru; where the metal has the oxidation states 0, 1, 2, 3 or 4;
E- is the anion of an oxygen acid or complex acid; and
the anionic ligands balance the charge of the 1, 2, 3 or 4 oxidation states of the metal.

For the compounds of the formula (1 a) or (1 b), the above-described preferences and embodiments apply.

Monodentate nonionic ligands may, for example, be selected from the group of the olefins (for example ethylene, propylene), allyls (allyl, 2-methallyl), solvating solvents (nitriles, linear or cyclic ethers, optionally n-alkylated amides and lactams, amines, phosphines, alcohols, carboxylic esters, sulphonic esters, nitrogen monoxide and carbon monoxide.

Monodentate anionic ligands may, for example, be selected from the group of halide (F, Cl, Br, I), pseudohalide (cyanide, cyanate, isocyanate) and anions of carboxylic acids, sulphonic acids and phosphonic acids (carbonate, formate, acetate, propionate, methylsulphonate, trifluoromethylsulphonate, phenylsulphonate, tosylate).

Bidentate nonionic ligands may, for example, be selected from the group of the linear or cyclic diolefins (for example hexadiene, cyclooctadiene, norbornadiene), dinitriles (malononitrile), optionally N-alkylated carboxamides, diamines, diphosphines, diols, acetonylacetonates, dicarboxylic esters and disulphonic esters.

Bidentate anionic ligands may, for example, be selected from the group of the anions of dicarboxylic acids, disulphonic acids and diphosphonic acids (for example of oxalic acid, malonic acid, succinic acid, maleic acid, methylenedisulphonic acid and methylenediphosphonic acid).

Preferred metal complexes are also those in which E is -Cl⁻, -Br⁻, -I⁻, ClO₄⁻, CF₃SO₃⁻, CH₃SO₃⁻, HSO₄⁻, (CF₃SO₂)₂N⁻, (CF₃SO₂)₃C⁻, tetraarylborates, for example B(phenyl)₄⁻, B[bis(3,5-trifluoromethyl)phenyl]₄⁻, B[bis(3,5-dimethyl)phenyl]₄⁻, B(C₆F₅)₄⁻ and B(4-methylphenyl)₄⁻, BF₄⁻, PF₆⁻, SbCl₆⁻, AsF₆ or SbF₆⁻.

Especially preferred metal complexes which are suitable particularly for hydrogenations correspond to the following formulae (XVI) and (XVII):

[A₁Me₂YZ] (XVI),

[A₁Me₂Y]⁺E₁⁻ (XVII),

in which
A₁ is a compound of the formula (1 a) or (1 b);
Me₂ is rhodium or iridium;
Y is two olefins or one diene;
Z is Cl, Br or I; and
E₁⁻ is the anion of an oxygen acid or complex acid.

For the compounds of the formula (1 a) or (1 b), the above-described embodiments and preferences apply.

When Y is defined as olefin, it may be C₂-C₁₂-olefins, preferably C₂-C₆-olefins and more preferably C₂-C₄-olefins. Examples are propene, but-1-ene and particularly ethylene. The diene may contain 5 to 12 and preferably 5 to 8 carbon atoms, and may be open-chain, cyclic or polycyclic dienes. The two olefin groups of the diene are preferably bonded by one or two CH₂ groups. Examples are 1,3-pentadiene, cyclopentadiene, 1,5-hexadiene, 1,4-cyclohexadiene, 1,4- or 1,5-heptadiene, 1,4- or 1,5-cycloheptadiene, 1,4- or 1,5-octadiene, 1,4- or 1,5-cyclooctadiene and norbornadiene. Y is preferably two ethylene, or 1,5-hexadiene, 1,5-cyclooctadiene or norbornadiene.

In formula (XVI), Z is preferably Cl or Br. Examples of E₁ are BF₄⁻, ClO₄⁻, CF₃SO₃⁻, CH₃SO₃⁻, HSO₄⁻, B(phenyl)₄⁻, B[bis(3,5-trifluoromethyl)phenyl]₄⁻, PF₆⁻, SbCl₆⁻, AsF₆⁻ or SbF₆⁻.

The inventive metal complexes are prepared by methods known in the literature (see also US-A-5,371,256, US-A-5,446,844, US-A-5,583,241 and E. Jacobsen, A. Pfaltz, H. Yamamoto (Eds.), Comprehensive Asymmetric Catalysis I to III, Springer Verlag, Berlin, 1999, and literature cited therein).

The inventive metal complexes are homogeneous catalysts or catalyst precursors which are activable under the reaction conditions and can be used for asymmetric addition reactions to prochiral unsaturated organic compounds; see E. Jacobsen, A. Pfaltz, H. Yamamoto (Eds.), Comprehensive Asymmetric Catalysis I to III, Springer Verlag, Berlin, 1999, and B. Cornils et al., in Applied Homogeneous Catalysis with Organometallic Compounds, Volume 1, Second Edition, Wiley VCH-Verlag, (2002). Further applications are, for example, the amination of aromatics or heteroaromatics which contain leaving groups, for example halide or sulphonate, with primary or secondary amines with palladium complexes, or the preferably Rh-catalysed enantioselective ring-opening reaction of oxabicyclic alkanes (M. Lautens et al. in Acc. Chem. Res. Volume 36 (203), pages 48-58).

The metal complexes may, for example, be used for the asymmetric hydrogenation (addition of hydrogen) of prochiral compounds with carbon/carbon or carbon/heteroatom double bonds. Such hydrogenations with soluble homogeneous metal complexes are described, for example, in Pure and Appl. Chem., Vol. 68, No. 1, pages 131-138 (1996). Preferred unsaturated compounds to be hydrogenated contain the C=C, C=N and/or C=O groups. For the hydrogenation, preference is given in accordance with the invention to using metal complexes of ruthenium, rhodium and iridium.

The invention further provides for the use of the inventive metal complexes as homogeneous catalysts for preparing chiral organic compounds by asymmetric addition of hydrogen to a carbon or carbon-heteroatom double bond in prochiral organic compounds.

A further aspect of the invention is a process for preparing chiral organic compounds by asymmetric addition of hydrogen to a carbon or carbon-heteroatom double bond in prochiral organic compounds in the presence of a catalyst, which is characterized in that the addition is performed in the presence of catalytic amounts of at least one inventive metal complex.

Preferred prochiral unsaturated compounds to be hydrogenated may contain one or more identical or different C=C, C=N and/or C=O groups in open-chain or cyclic organic compounds, where the C=C, C=N and/or C=O groups may be part of a ring system or be exocyclic groups. The prochiral unsaturated compounds may be alkenes, cycloalkenes, heterocycloalkenes, and also open-chain or cyclic ketones, α,β-diketones, α- or β-ketocarboxylic acids and their α,β-ketoacetals or -ketals, esters and amides, ketimines and kethydrazones. Alkenes, cycloalkenes, heterocycloalkenes also include enamides.

The process according to the invention can be performed at low or elevated temperatures, for example temperatures of -20 to 150°C, preferably of -10 to 100°C, and more preferably of 10 to 80°C. The optical yields are generally better at relatively low temperature than at relatively high temperatures.

The process according to the invention can be performed at standard pressure or elevated pressure. The pressure may, for example, be 10⁵ to 2×10⁷ Pa (pascal). Hydrogenations may be performed at standard pressure or at elevated pressure.

Catalysts are used preferably in amounts of 0.00001 to 10 mol%, more preferably 0.00001 to 5 mol% and especially preferably 0.00001 to 2 mol%, based on the compound to be hydrogenated.

The preparation of the ligands and catalysts and the hydrogenation can be performed without or in the presence of an inert solvent, in which case one solvent or mixtures of solvents may be used. Suitable solvents are, for example, aliphatic, cycloaliphatic and aromatic hydrocarbons (pentane, hexane, petroleum ether, cyclohexane, methylcyclohexane, benzene, toluene, xylene), aliphatic halohydrocarbons (methylene chloride, chloroform, di- and tetrachloroethane), nitriles (acetonitrile, propionitrile, benzonitrile), ethers (diethyl ether, dibutyl ether, t-butyl methyl ether, ethylene glycol dimethyl ether, ethylene glycol diethyl ether, diethylene glycol dimethyl ether, tetrahydrofuran, dioxane, diethylene glycol monomethyl or monoethyl ether), ketones (acetone, methyl isobutyl ketone), carboxylic esters and lactones (ethyl acetate or methyl acetate, valerolactone), N-substituted lactams (N-methylpyrrolidone), carboxamides (dimethylacetamide, dimethylformamide), acyclic ureas (dimethylimidazoline), and sulphoxides and sulphones (dimethyl sulphoxide, dimethyl sulphone, tetramethylene sulphoxide, tetramethylene sulphone) and optionally fluorinated alcohols (methanol, ethanol, propanol, butanol, ethylene glycol monomethyl ether, ethylene glycol monoethyl ether, diethylene glycol monomethyl ether, 1,1,1-trifluoroethanol) and water. Suitable solvents are also low molecular weight carboxylic acids, for example acetic acid.

The reactions can be performed in the presence of cocatalysts, for example quaternary ammonium halides (tetrabutylammonium chloride, bromide or iodide) or protic acids, for example mineral acids such as HCl or strong organic acids such as trifluoroacetic acid, or mixtures of such halides and acids (see, for example, US-A-5,371,256, US-A-5,446,844 and US-A-5,583,241 and EP-A-0 691 949). The presence of fluorinated alcohols, for example 1,1,1-trifluoroethanol, can also promote the catalytic reaction. The addition of bases, for example tertiary amines or phosphines, alkali metal hydroxides, secondary amides, alkoxides, carbonates and hydrogencarbonates may also be advantageous. The selection of a cocatalyst is guided mainly by the metal in the metal complex and the substrate. In the hydrogenation of prochiral arylketimines, the use of iridium complexes in combination with tetra-C₁-C₄-alkylammonium iodides and mineral acids, preferably HI, has been found to be useful.

The metal complexes used as catalysts may be added as separately prepared isolated compounds, or else formed in situ before the reaction and then mixed with the substrate to be hydrogenated. It may be advantageous to additionally add ligands in the reaction using isolated metal complexes, or to use an excess of the ligands in the in situ preparation. The excess may, for example, be 1 to 6 mol and preferably 1 to 2 mol, based on the metal compound used for the preparation.

The process according to the invention is generally performed in such a way that the catalyst is initially charged and then the substrate, optionally reaction assistant and the compound to be added on are added, and then the reaction is started. Gaseous compounds to be added on, for example hydrogen, are preferably injected under pressure. The process can be performed continuously or batchwise in various reactor types.

The chiral organic compounds preparable in accordance with the invention are active substances or intermediates for preparing such substances, especially in the sector of the preparation of aromas and flavourings, pharmaceuticals and agrochemicals.

The examples which follow illustrate the invention. All reactions are performed with the exclusion of air under argon and with degassed solvents.

### A) Preparation of ligands

All reactions are carried out under argon. The reactions and the yields are not optimized. The introduction of the chlorophosphine and its hydrolysis is considered as a one-step reaction since the chlorophosphine is not worked up but immediately hydrolyzed.

### Examples A1-A2:

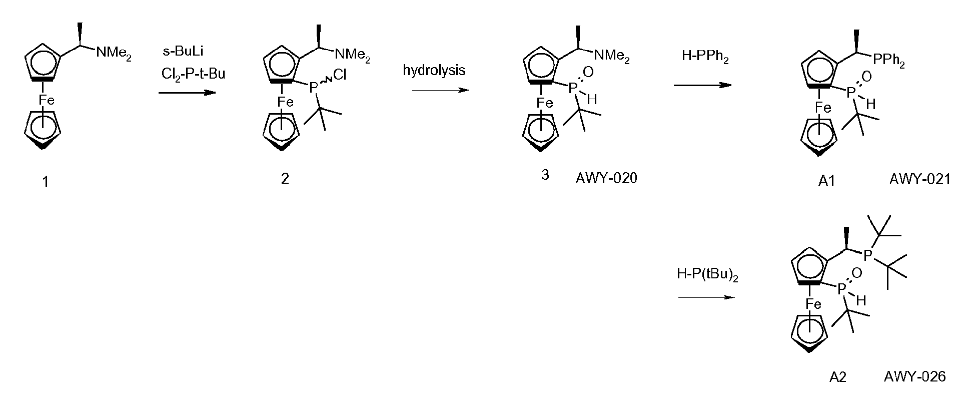

### Synthesis of compound 3:

50 ml (62.8 mmol) s-BuLi (1.3M in cyclohexane) are added within approx. 10 minutes to a stirred solution of 14.7g (57.1 mmol) of (R)-N,N-dimethyl-1-ferrocenylethylamine **1** in 120 ml diethylether at -78°C. The mixture is then allowed to warm to roomtemperature and stirred for 1 hour. The mixture is cooled again to -78°C and added to a solution of 9.1 g (57.1 mmol) of dichlorotert.-butylphosphine in 100 ml diethylether which is stirred at -78°C. Cooling is removed and the reaction mixture is stirred at room temperature overnight. The resulting orange suspension of compound **2** is then poured into a stirred mixture of 40 ml NEt₃ in 400 ml water and stirred for 1 hour. The organic phase is separated, washed with water, dried with NaSO₄ and the solvent distilled off under reduced pressure. The resulting solid crude product consists of a mixture of a major diastereomer **3** and a minor diastereomer **3**' (ratio ∼10 : 1) which differ in the configuration of the SPO group. If present, unreacted **1** can be separated by suspending and stirring the crude product in 40ml of heptane at 0°C for 2 hours and filtering off the solvent. If required, pure major or minor diastereomer can be obtained e.g. by chromatography (silicagel; eluent= heptane / ethylacatate / NEt₃ 1 : 1 : 0.05).

¹H-NMR (C₆D₆, 300 MHz, characteristic signals) for major diastereomer **3:** 6.80 (d, J=443Hz, 1H), 4.65 (q, 1H), 4.19 (s, 5H), 4.08 (s, 1H), 4.0 (q, 1H), 3.82-3.86 (m, 1H), 2.13 (s, 6H), 1.13 (d, 9H), 1.09 (d, 3H). ³¹P-NMR (C₆D₆, 121 MHz, ¹-decoupled): 48.5 (s).
¹H-NMR (C₆D₆, 300 MHz, characteristic signals) for minor diastereomer **3'**:6.96 (d, J=458, 1H), 4.42-4.49 (m, 1H), 4.31 (s, 5H), 4.01-4.04 (m, 1H), 3.89-3.91 (m, 1H), 3.57 (q, 1H), 1.87 (s,6H), 1.27 (d,9H), 1.35 (d,3H), ³¹P-NMR (C₆D₆, 121MHz, ¹H-decoupled): 36.7 (s).

### Dependence of the ratio of the two diastereomers 3 and 3' on the hydrolysis conditions:

The following experiment shows that the ratio of the two diastereomers 3 and 3' strongly depends on the hydrolysis conditions: If the suspension of compound **2** is hydrolyzed by pouring and stirring it in 50 ml of water (instead of a mixture of 40 ml NEt₃ in 400 ml water), then a mixture of the major and minor diastereomer **3** and **3'** is obtained, with a ratio of approx. 1:1.

### Synthesis of ligand A1:

24.4 mmol of a 20% (weight) solution of diphenylphosphine in acetic acid is added to a solution of 8.0 g (22.1 mmol) of compound **3** (approx. 10:1 mixture of the major diastereomer **3** and minor diastereomer **3'**) in 40 ml of acetic acid. The red solution is stirred at 100°C for 17 hours. According to ³¹P-NMR, no significant decomposition or epimerization of compound **3** or of the product **A1** formed can be observed under these conditions. After cooling to room temperature, water is added and the reaction mixture is extracted several times with ethylacetate. The organic phases are collected, dried with Na₂SO₄ and the solvents distilled off under reduced pressure. Column chromatography of the resulting crude product (silicagel, eluent= CH₂Cl₂ / MeOH 99 : 1) gives pure ligand **A1** as an orange solid (yield 75%).

1H-NMR (C₆D₆; 300MHz, characteristic signals): 7.00 (d, J=449Hz, 1H), 7.42-7.60 (m, 4H), 6.98-7.14 (m, 6H), 4.72 (q, 1H), 4.18 (s, 5H), 3.96-4.02 (m, 1H), 3.82-4.02 (m, 1H), 3.65 (s, 1H), 1.45 (dd, 3H), 1.15 (d,9H), ³¹P-NMR (C₆D₆, 121MHz, ¹H-decoupled): 49.25 (d_{PP}, J=∼4 Hz), 13.24 (d, J_{PP}=∼4 Hz).

Crystals of a metal complex of A1 allowed to determine the absolute configuration of A1 by x-ray analysis. The absolute configuration of A1 was found to be (R_{C}, Sₚₗₐₙₐᵣ, S_{P(SPO)})

### Synthesis of ligand A2:

4.7 mmol of a 25% (weight) solution of di-tert.-butyl-phosphine in acetic acid is added to a solution of 1.55 g (4.3 mmol) of the major diastereomer of compound **3** in 10 ml of acetic acid. The red solution is stirred at 100°C for 20 hours. According to ³¹P-NMR no significant decomposition or epimerization of compound **3** or of the product **A2** formed can be observed under these conditions. Most of the acetic acid is distilled off under reduced pressure. The obtained residue is then extracted with dichloromethane and water. The organic phase is dried with Na₂SO₄ and the solvent distilled off under reduced pressure. Column chromatography of the resulting crude product (silicagel, eluent= CH₂Cl₂ / MeOH 99 : 1) gives pure ligand **A2** as a brown crystalline solid (yield 69%).

¹H-NMR (C₆D₆; 300MHz characteristic signals): 7.15 (d, J=458Hz, 1H), 4.25 (s, 5H), 4.11 (s, 1H), 4.06 (q, 1H), 3.89 (s, 1H), 1,74 (dd, 3H), 1.40 (d, 9H), 1.24(d, 9H), 1.09 (d, 9H), ³¹P-NMR (C₆D₆, 121MHz, ¹H-decoupled): 53.6 (s), 53.2 (s).

The absolute configuration of A2 was found to be (R_{C}, Sₚₗₐₙₐᵣ, S_{P(SPO)}).

### Example A3:

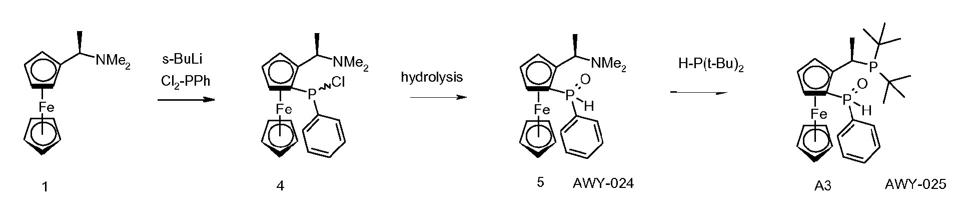

### Synthesis of compound 5:

50.5 ml (65.4 mmol) s-BuLi (1.3M in cyclohexane) are added to a stirred solution of 15.3g (59.9 mmol) of (R)-N,N-dimethyl-1-ferrocenylethylamine **1** in 120 ml diethylether at -78°C. The red-brown solution is then allowed to warm to roomtemperature and stirred for 1 hour. The mixture is cooled again to -78°C and added to a solution of 10.4 g (59.5 mmol) of dichlorophenylphosphine in 100 ml diethylether which is stirred at -78°C. Cooling is removed and the reaction mixture is stirred at room temperature overnight. The resulting brown suspension of compound **4** is then poured into a stirred mixture of 40 ml NEt₃ in 400 ml water and stirred for 1 hour. The organic phase is separated, washed with water, dried with NaSO₄ and the solvent distilled off under reduced pressure. The resulting dark oily crude product consists of a mixture of a major diastereomer 5 and a minor diastereomer **5'** (ratio ∼5 : 1) which differ in the configuration of the SPO group. If desired, these two diastereomers can be separated by column chromatography (silicagel; eluent= ethylacetate / heptane / NEt₃ 1 : 1 : 0.05).

¹H-NMR (C₆D₆, 300 MHz, characteristic signals) for major diastereomer **5:** 8.07 (d, J=494Hz, 1H), 7.70-7.79 (m, 2H), 7.06-7.14 (m, 3H), 4.32 (q, 1H), 4.25 (s, 5H), 4.01-4.10 (m, 1H), 3.92-3.99 (m, 1H), 3.88-3.91 (m, 1H), 1.99 (s, 6H), 1.02 (d, 3H), ³¹P-NMR (C₆D₆, 121 MHz, ¹H-decoupled): 14.9 (s).

¹H-NMR (C₆D₆, 300 MHz, characteristic signals) for minor diastereomer **5':** 7.07 (d, J=461 Hz, 1H), 7.70-7.79 (m, 2H), 6.93-7.11 (m, 3H), 4.51 (q, 1H), 4.25 (s, 5H), 4.03-4.10 (m, 3H), 1.79 (s, 6H), 1.00 (d, 3H). ³¹P-NMR (C₆D₆, 121MHz, ¹H-decoupled): 17.0 (s).

### Dependence of the ratio of the two diastereomers 5 and 5' on the hydrolysis conditions:

The following experiment shows that the ratio of the two diastereomers of compound **5** strongly depends on the hydrolysis conditions: If the suspension of compound **4** is hydrolyzed by pouring and stirring it in 50 ml of water (instead of a mixture of 40 ml NEt₃ in 400 ml water), then a mixture of the major and minor diastereomer **5** and **5'** is obtained, with a ratio of approx. 3 : 2.

### Synthesis of the ligands A3 (major diastereomer) and A3' (minor diastereomer) :

29 mmol of a 25% (weight) solution of di-tert-butylphosphine in acetic acid is added to a solution of 10.2 g (26.2 mmol) of a 5 : 1 mixture of the major diastereomer 5 and minor diastereomer **5'** in 80 ml of acetic acid. The reaction mixture is stirred at 100°C for 16 hours. According to ³¹P-NMR no significant decomposition or epimerization of compound **5** or of the product **A3** formed can be observed under these conditions. Most of the acetic acid is distilled off under reduced pressure. The obtained residue is then extracted with dichloromethane and water. The organic phase is dried with Na₂SO₄ and the solvent distilled off under reduced pressure. Column chromatography of the resulting crude product (silicagel, eluent= CH₂Cl₂ / MeOH 99 : 1) allows to separate both diastereomers **A3 and A3'**. The major diastereomer of **A3** is eluted first (orange-brown solid, yield 67%) and is followed by the minor diastereomer of **A3'** (orange-brown solid, yield 12%).

¹H-NMR (C₆D₆; 300MHz, characteristic signals) of major diastereomer **A3:** 8.65 (d, J=501 Hz, 1H), 7.67-7.76 (m, 2H), 7.02-7.11 (m, 3H), 4.30 (s, 5H), 4.14-4.20 (m, 1H), 4.02 (q, 1H), 3,85 (q, 1H), 3.56 (q, 1H), 1,76 (dd, 3H), 1.43 (d, 9H), 1.13 (d, 9H), ³¹P-NMR (C₆D₆, 121MHz, ¹H-decoupled): 47.6 (d, J=38 Hz), 16.2 (d, J=38 Hz).

¹H-NMR (C₆D₆; 300MHz, characteristic signals) of minor diastereomer **A3':** 7.8 (d, J=472Hz, 1H), 7.87-7.96 (m, 2H), 7.09-7.14 (m, 3H), 4.29 (s, 5H), 4.13 (s, 1H), 3.99-4.07 (m, 3H), 1,67 (dd, 3H), 1.32 (d, 9H), 0.86(d, 9H), ³¹P-NMR (C₆D₆,121 MHz, ¹H-decoupled): 51.8 (d, J=∼4 Hz), 21.2 (d, J=∼4 Hz).

### Comparison of the ligands prepared by the process of the invention with selected

stereoisomers of the same ligands described in WO 2007/135179 or prepared by the 3-step synthesis described in WO 2007/135179.

All ligands in the present work and in WO 2007/135179 were prepared starting from (R)-N,N-dimethyl-1-ferrocenylethylamine **1**. The ligands with the same substituents only differ in the configuration of the SPO-group. Since not all configurations have yet been determined, the epimers are also described by their NMR data.

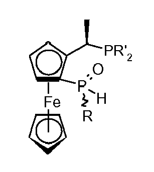

**Comparison of the NMR-data:**

| **Ligand** | | **R** | **R'** | δ **³¹P** | **J_{PP} [Hz]** | **source** | **absolute configuration*** |
|---|---|---|---|---|---|---|---|
| A1 | dia1 | t-Bu | Ph | 49.3 (d); 13.2 (d) | 4 | Process of the invention | R_{C}, Sₚₗₐₙₐᵣ, S_{P} |
| L1 | dia2 | t-Bu | Ph | 32.6 (s); 4.8 (s) | - | example A1 in WO 2007/135179 | R_{C}, Sₚₗₐₙₐᵣ, R_{P} |
| | | | | | | | |
| A2 | dia1 | t-Bu | t-Bu | 53.6 (s); 53.2 (s) | - | Process of the invention | R_{C}, Sₚₗₐₙₐᵣ, S_{P} |
| L10 | dia2 | t-Bu | t-Bu | 44.8 (d); 35.0 (d) | 39 | Example A9 in WO 2007/135179 | R_{C}, Sₚₗₐₙₐᵣ, R_{P} |
| | | | | | | | |
| A3 | dia1 | Ph | t-Bu | 47.6 (d); 16.2 (d) | 38 | Process of the invention | R_{C}, Sₚₗₐₙₐᵣ, configuration of SPO not determined |
| L2 | dia1 | Ph | t-Bu | 47.7 (d); 16.2 (d) | 38 | ligand prepared using the 3-step synthesis as described in WO 2007/135179 | R_{C}, Sₚₗₐₙₐᵣ, configuration of SPO not determined |
| A3' | dia2 | Ph | t-Bu | 51.8 (d); 21.2 (d) | 4 | Process of the invention | R_{C}, Sₚₗₐₙₐᵣ, configuration of SPO not determined |

| | | | | | | | |
|---|---|---|---|---|---|---|---|
| * configuration as determined by an x-ray analysis of crystals of a metal complex of ligand A1. | | | | | | | |

The NMR-data show that compared with the three-step synthesis described in WO 2007/135179 the new two-step synthesis can give access to ligands with a different configuration of the SPO group.

Structures of the ligands with determined absolute configuration:

| | | | |
|---|---|---|---|
| 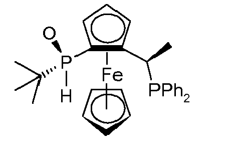 | 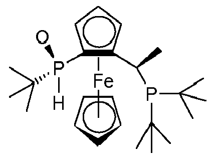 | 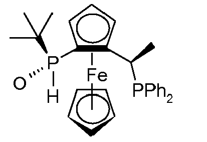 | 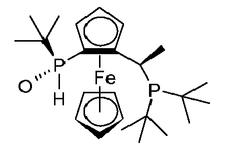 |
| Ligand A1 (R_{C}, Sₚₗₐₙₐᵣ, S_{P}) | Ligand A2 (R_{C}, Sₚₗₐₙₐᵣ, S_{P}) | Ligand L1 (R_{C}, Sₚₗₐₙₐᵣ, R_{P}) | Ligand L10 (R_{C}, Sₚₗₐₙₐᵣ, R_{P}) |

### B) Preparation of metal complexes

The Rh complexes are prepared by mixing 1 molar equivalent of ligand with 0.95 molar equivalent of [Rh(nbd)₂]BF₄, in methanol, CD₃OD or CDCl₃. In general, the complex is formed within less than 10 minutes. The solutions are analysed directly by means of ³¹P NMR. The complexes can be isolated by precipitation with, for example, heptane.

### Example B1: Rh complex with ligand A1 in CD₃OD

A suspension is obtained. ³¹P-NMR (C₆D₆, 121MHz, ¹H-decoupled, characteristic signals): δ 131.6 (dd), 58.04 (dd)

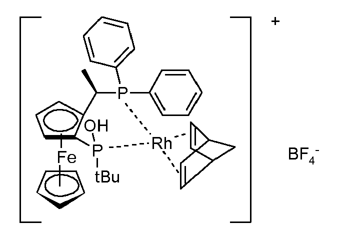

### Example B2: Rh complex with ligand A1 in CDCl₃

A slurry is obtained from which crystals form. ³¹P-NMR (C₆D₆, 121MHz, ¹H-decoupled characteristic signals): δ 61.2 (s), 40.5 (d)

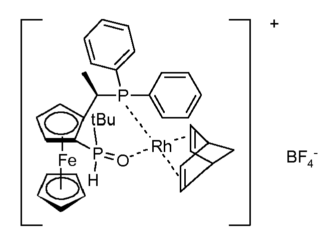

### C) Use examples

Examples C1 - C38 (Table 2): Hydrogenation of various unsaturated substrates and comparison of hydrogenation results of different epimeric ligands which differ in the configuration of the SPO-group:

All operations are performed under argon and with degassed solvents. The hydrogenations are carried out in glass vials (low hydrogen pressure) or in steel autoclaves (high hydrogen pressure). Agitation is effected either by a magnetic stirrer or by shaking the reactor. The catalysts are prepared 'in situ' by mixing 1 mol-equivalent of a metal of a metal precursor (see table 2) with 1.1 mol-equivalents of ligand in the solvent given in Table 2. The substrate is dissolved in the solvent given in table 2 and added to the catalyst as a solution. Subsequently, the inert gas is exchanged for hydrogen and the hydrogenation is started by starting agitation.

**Table 1: Substrates**

| Substrate | Structures | Determination of conversion and ee |
|---|---|---|
| DMI | 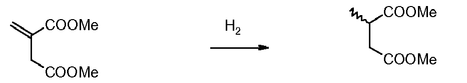 | GC with chiral column: Lipodex-E |
| MAA | 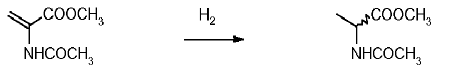 | GC with chiral column: Chirasil-L-val |
| MAC | 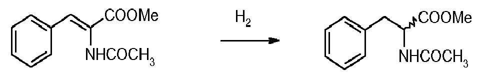 | GC with chiral column: Chirasil-L-val |
| ACA | 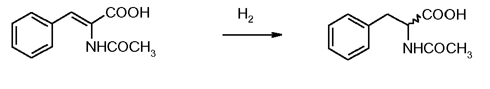 | First derivatization with TMS-diazomethane, then GC with chiral column: Chirasil-L-val |
| Z-EAAC | 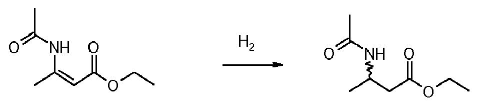 | GC with chiral column: Betadex-110 |
| E-EAAC | 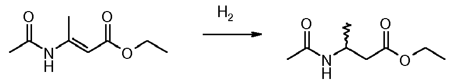 | GC with chiral column: Betadex-110 |
| EOP | 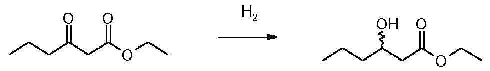 | GC with chiral column: Lipodex-E |
| EBA | 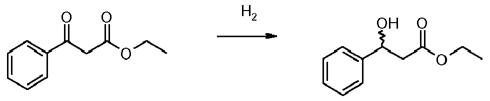 | HPLC with chiral column: Chiracel-OD-H |
| ETAA | 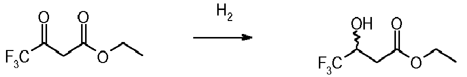 | GC with chiral column: Lipodex-E |

The abbreviations in Table 2 mean: ee = enantiomeric excess, GC = gas chromatography, TMS = trimethylsilyl, HPLC = high-pressure liquid chromatography.

**Table 2: Hydrogenation results**

| No. | Lig. | Metal | Substrate | [S] | S/C | Sol. | P | T | t [h] | C (%) | ee (%) |
|---|---|---|---|---|---|---|---|---|---|---|---|
| C1 | A1 | Rh^{a}) | MAA | 0.25 | 200 | MeOH | 1 | 25 | <0.1 | 100 | -99.4 |
| C2 | L1 | Rh^{a}) | MAA | 0.25 | 200 | MeOH | 1 | 25 | <0.1 | 100 | 34.7 |
| | | | | | | | | | | | |
| C3 | A1 | Rh^{a}) | DMI | 0.25 | 200 | MeOH | 1 | 25 | <0.1 | 100 | -97.9 |
| C4 | L1 | Rh^{a}) | DMI | 0.25 | 200 | MeOH | 1 | 25 | <0.1 | 100 | 88.9 |
| | | | | | | | | | | | |
| C5 | A1 | Rh^{a}) | Z-EAAC | 0.36 | 100 | THF(9) TFE(1) | 1 | 25 | 2 | 100 | 61.2 |
| C6 | L1 | Rh^{a}) | Z-EAAC | 0.36 | 100 | THF(9) TFE(1) | 1 | 25 | 2 | 100 | 25.1 |
| | | | | | | | | | | | |
| C7 | A1 | Rh^{a}) | E-EAAC | 0.36 | 100 | THF | 1 | 25 | 2 | 100 | 93.8 |
| C8 | L1 | Rh^{a}) | E-EAAC | 0.36 | 100 | THF | 1 | 25 | 2 | 100 | -94.2 |
| | | | | | | | | | | | |
| C9 | A1 | Rh^{a}) | MAC | 0.36 | 100 | EtOH | 1 | 25 | 2 | 100 | -97.3 |
| C10 | L1 | Rh^{a}) | MAC | 0.36 | 100 | EtOH | 1 | 25 | 2 | 100 | 37.9 |
| | | | | | | | | | | | |
| C11¹⁾ | A1 | Rh^{a}) | ACA | 0.36 | 100 | EtOH(1) THF(4) | 1 | 25 | 2 | 100 | -99.9 |
| C12¹⁾ | L1 | Rh^{a}) | ACA | 0.36 | 100 | EtOH(1) THF(4) | 1 | 25 | 2 | 100 | 98.4 |
| | | | | | | | | | | | |
| C13 | A1 | Ir^{c)} | EOP | 0.1 | 25 | DCE | 80 | 80 | 14 | 100 | 87.1 |
| C14 | A1 | Ir^{c)} | ETAA | 0.36 | 100 | DCE | 80 | 80 | 14 | 100 | -93.7 |
| C15 | A1 | Ir^{c)} | EBA | 0.36 | 100 | DCE | 80 | 80 | 14 | 100 | -98.2 |
| C16 | A1 | Ru^{b)} | EBA | 0.36 | 100 | EtOH | 80 | 80 | 14 | 100 | -67.8 |
| | | | | | | | | | | | |
| C17 | A2 | Rh^{a)} | MAA | 0.25 | 200 | MeOH | 1 | 25 | <0.1 | 100 | -95.8 |
| C18 | L10 | Rh^{a}) | MAA | 0.25 | 200 | MeOH | 1 | 25 | <0.1 | 100 | 92.6 |
| | | | | | | | | | | | |
| C19 | A2 | Rh^{a}) | DMI | 0.36 | 100 | THF | 1 | 25 | 2 | 100 | -92.7 |
| C20 | L10 | Rh^{a}) | DMI | 0.36 | 100 | THF | 1 | 25 | 2 | 100 | 18.6 |
| | | | | | | | | | | | |
| C21 | A2 | Rh^{a)} | MAC | 0.36 | 100 | EtOH | 1 | 25 | 2 | 100 | -99.3 |
| C22 | L10 | Rh^{a)} | MAC | 0.36 | 100 | EtOH | 1 | 25 | 2 | 100 | 96.4 |
| | | | | | | | | | | | |
| C23¹⁾ | A2 | Rh^{a)} | ACA | 0.36 | 100 | EtOH | 1 | 25 | 2 | 100 | -98.6 |
| C24¹⁾ | L10 | Rh^{a)} | ACA | 0.36 | 100 | EtOH | 1 | 25 | 2 | 100 | -10.8 |
| | | | | | | | | | | | |
| C25 | A2 | Rh^{a)} | E-EAAC | 0.36 | 100 | EtOH | 1 | 25 | 2 | 100 | 76.2 |
| C26 | L10 | Rh^{a)} | E-EAAC | 0.36 | 100 | EtOH | 1 | 25 | 2 | 100 | -57.8 |
| | | | | | | | | | | | |
| C27 | A2 | Rh^{a)} | Z-EAAC | 0.36 | 100 | EtOH(9) TFE(1) | 1 | 25 | 2 | 100 | 75.8 |
| C28 | L10 | Rh^{a)} | Z-EAAC | 0.36 | 100 | EtOH(9) TFE(1) | 1 | 25 | 2 | 100 | -51.4 |
| | | | | | | | | | | | |
| C29 | A2 | Rh^{a)} | EOP | 0.1 | 25 | THF | 80 | 80 | 14 | 86 | -79.0 |
| C30 | A2 | Rh^{a)} | EBA | 0.1 | 25 | THF | 80 | 80 | 14 | 100 | 86.2 |
| | | | | | | | | | | | |
| C31 | A3 | Rh^{a)} | MAA | 0.25 | 200 | THF | 1 | 25 | 2 | 100 | -72.1 |
| C32 | A3' | Rh^{a)} | MAA | 0.25 | 200 | THF | 1 | 25 | 2 | 100 | 68.6 |
| | | | | | | | | | | | |
| C33 | A3 | Rh^{a)} | DMI | 0.36 | 100 | MeOH | 1 | 25 | 2 | 100 | 94.1 |
| C34 | A3' | Rh^{a)} | DMI | 0.36 | 100 | MeOH | 1 | 25 | 2 | 100 | -84.2 |
| | | | | | | | | | | | |
| C35 | A3 | Rh^{a)} | E-EAAC | 0.36 | 100 | MeOH | 1 | 25 | 2 | 100 | -98.8 |
| C36 | A3' | Rh^{a)} | E-EAAC | 0.36 | 100 | MeOH | 1 | 25 | 2 | 100 | 57.9 |
| | | | | | | | | | | | |
| C37 | A3 | Rh^{a)} | Z-EAAC | 0.36 | 100 | EtOH(9) TFE(1) | 1 | 25 | 2 | 100 | -98.3 |
| C38 | A3' | Rh^{a)} | Z-EAAC | 0.36 | 100 | EtOH(9) TFE(1) | 1 | 25 | 2 | 100 | -0.7 |

| | | | | | | | | | | | |
|---|---|---|---|---|---|---|---|---|---|---|---|
| Additions: ¹⁾ 12 mol-equivalents of 1,4-diazobicyclo[2.2.2]octane / metal; | | | | | | | | | | | |

In Table 2: [S] means molar substrate concentration; S/C means substrate/catalyst ratio; t means hydrogenation time (in most cases, the time needed to obtain complete conversion is shorter) ; Lig. means ligand, Sol. means solvent (MeOH = methanol; EtOH = ethanol; Tol = toluene; THF = tetrahydrofuran; DCE = 1,2-dichloroethane, TFE = 2,2,2-Trifluoroethanol);
Metal means metal precursor which is used in the hydrogenations: Rh^{a)} = [Rh(norbornadiene)₂]BF₄; Ru^{b)}= [Rul₂(p-methylcumene)]₂ ; [Ir^{c)}= [Ir(cyclooctadiene)Cl]₂; C = conversion; ee= enantiomeric excess of the hydrogenation product. A positive number means that the GC or HPLC peak of the enantiomer with the shorter retention time is larger than that of the enantiomer with the longer retention time, a negative number means that the GC or HPLC peak of the enantiomer with the longer retention time is larger than that of the enantiomer with the shorter retention time.

## Claims

1. Process for preparing compounds of the formula (1), 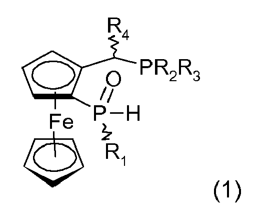 in which
R₁ is C₁-C₈-alkyl, unsubstituted cyclopentyl, cyclohexyl, norbornyl or adamantyl, or cyclopentyl or cyclohexyl, substituted by 1 to 3 C₁-C₄-alkyl or C₁-C₄-alkoxy, or benzyl phenyl, naphthyl and anthryl which are unsubstituted or substituted by 1 to 3 C₁-C₄-alkyl, C₁-C₄-alkoxy, C₁-C₄-fluoroalkyl or C₁-C₄-fluoroalkoxy, F and Cl, each of R₂ and R₃ is independently a C-bonded hydrocarbon radical or a heterohydrocarbon radical,
R₄ is C₁-C₄-alkyl, cyclopentyl, cyclohexyl, phenyl, methylphenyl, methylbenzyl or benzyl,
which includes the following steps:
(a) stereoselective metallation in ortho position to the amine side-chain of a compound of formula (A) 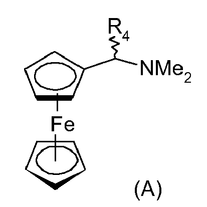
in which R₄ is as defined above,
reaction with a dihalide of formula R₁-PX2 in which R₁ is as defined above and X is Cl or Br,
to give a compound of formula (B) 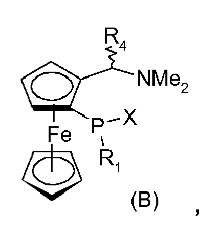 stereoselective hydrolysis of the compound of formula (B) to give a compound of formula (C) containing an SPO group 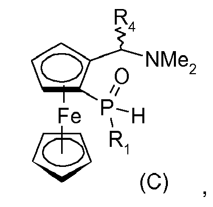 and
(b) reaction of the compound of formula (C) with a secondary phosphine of formula H-PR₂R₃ in which R₂ and R₃ are as defined above,
to give the compounds of formula (1).

2. Process of claim 1, wherein the hydrolysis is performed in a basic aqueous solvent containing a tertiary amine.

3. Process of claim 1, wherein hydrolysis is performed by adding the reaction mixture containing the compound of formula (B) to a mixture of triethylamine and water, at a temperature between 0°C and room temperature.

4. Process of claim 1, wherein R₂ and R₃ are identical C-bonded hydrocarbon radicals or heterohydrocarbon radicals.

5. Process of claim 1, wherein each of R₂ and R₃ is independently a C-bonded hydrocarbon radical or an O-atom containing heterohydrocarbon radical which has 1 to 18 carbon atoms and is unsubstituted or substituted by C₁-C₆-alkyl, trifluoromethyl, C₁-C₆-alkoxy, trifluoromethoxy, (C₁-C₄-alkyl)₂amino, (C₆H₅)₃Si, (C₁-C₁₂-alkyl)₃Si, halogen.

6. Process of claim 1, wherein the secondary phosphine of formula HPR₂R₃ is a noncyclic secondary phosphine selected from the group of H-P(C₁-C₆-alkyl)₂, H-P(C₅-C₈-cycloalkyl)₂, H-P(C₇-C₈-bicycloalkyl)₂, H-P(o-furyl)₂, H-P(C₆H₅)₂, H-P[2-(C₁-C₆-alkyl)C₆H₄]₂, H-P[3-(C₁-C₆-alkyl)C₆H₄]₂, H-P[4-(C₁-C₆-alkyl)C₆H₄]₂, H-P[2-(C₁-C₆-alkoxy)C₆H₄]₂, H-P[3-(C₁-C₆-alkoxy)C₆H₄]₂, H-P[4-(C₁-C₆-alkoxy)C₆H₄]₂, H-P[2-(trifluoromethyl)C₆H₄]₂, H-P[3-(trifluoromethyl)C₆H₄]₂, H-P[4-(trifluoromethyl)C₆H₄]₂, H-P[3,5-bis(trifluoromethyl)C₆H₃]₂, H-P[3,5-bis(C₁-C₆-alkyl)₂C₆H₃]₂, H-P[3,5-bis(C₁-C₆-alkoxy)₂C₆H₃]₂ and H-P[3,5-bis(C₁-C₆-alkyl)₂-4-(C₁-C₆-alkoxy)C₆H₂]₂, or a cyclic phosphine selected from the group of 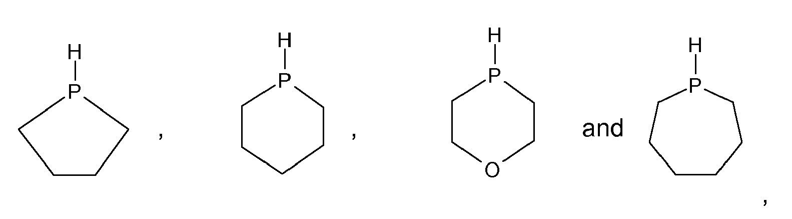 which are unsubstituted or mono- or polysubstituted by C₁-C₄-alkyl, C₁-C₄-alkoxy, C₁-C₄-alkoxy-C₁-C₂-alkyl, phenyl, benzyl, benzyloxy or C₁-C₄-alkylidenedioxy.

7. Process of claim 1, wherein R₁ is t-butyl or phenyl.

8. Process of claim 1, wherein R₄ is methyl or phenyl.

9. Compounds of formula (1 a) 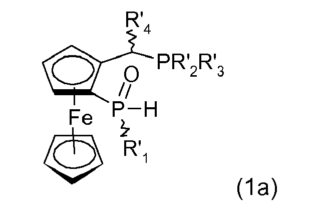 having the following absolute configuration (R_{C}, Sₚₗₐₙₐᵣ, _{SP(SPO)}) or (Sc, Rₚₗₐₙₐᵣ, R_{P(SPO)}) in which
R'₁ is t-butyl
R'₂ and R'₃ are each independently a C-bonded hydrocarbon or heterohydrocarbon radical which has 1 to 18 atoms, the optional heteroatoms being one or more oxygen atoms, the hydrocarbon or heterohydrocarbon radical being unsubstituted or substituted by 1 to 3 of the groups C₁-C₆-alkyl, trifluoromethyl, C₁-C₆-alkoxy, trifluoromethoxy, (C₁-C₄-alkyl)₂amino, (C₆H₅)₃Si, (C₁-C₁₂-alkyl)₃Si and/or halogen, and
R'₄ is methyl or phenyl.

10. Compounds of claim 9, wherein the group -PR'₂R'₃ is selected from -P(CH₃)₂, -P(i-C₃H₇)₂, -P(n-C₄H₉)₂, -P(i-C₄H₉)₂, -P(t-C₄H₉)₂, -P(C₅H₉), -P(C₆H₁₁)₂, -P(norbornyl)₂, -P(o-furyl)₂, -P(C₆H₅)₂, P[2-(methyl)C₆H₄]₂, P[3-(methyl)C₆H₄]₂, -P[4-(methyl)C₆H₄]₂, -P[2-(methoxy)C₆H₄]₂, -P[3-(methoxy)C₆H₄]₂, -P[4-(methoxy)C₆H₄]₂, -P[3-(trifluoromethyl)C₆H₄]₂, -P[4-(trifluoromethyl)C₆H₄]₂, -P[3,5-bis(trifluoromethyl)C₆H₃]₂, - P[3,5-bis(methyl)₂C₆H₃]₂, -P[3,5-bis(methoxy)₂C₆H₃]₂ and -P[3,5-bis(methyl)₂-4-(methoxy)C₆H₂]₂, and the groups of the formulae 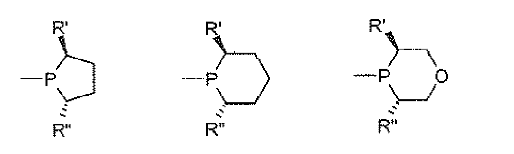 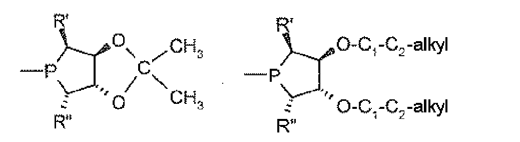 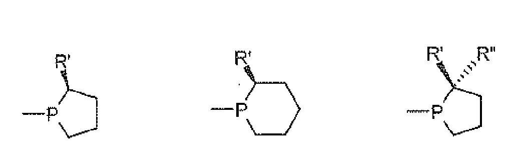 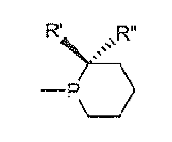 in which
R' is methyl, ethyl, methoxy, ethoxy, phenoxy, benzyloxy, methoxymethyl, ethoxymethyl or benzyloxymethyl and R" independently has the same definition as R' and is different from R'.

11. Compounds of claim 9 selected from

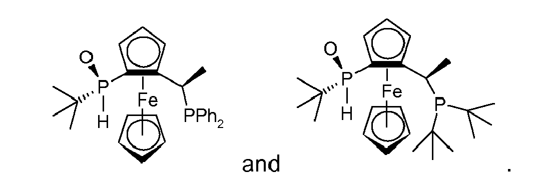

12. Compounds of formula (1 b) 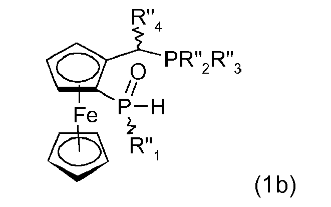 having an absolute configuration in the phosphine moiety different from that of ligands L2 and L8 disclosed in WO 2007/135179,
in which
R"₁ is phenyl.
R"₂ and R"₃ are each independently a C-bonded hydrocarbon or heterohydrocarbon radical which has 1 to 18 atoms, the optional heteroatoms being one or more oxygen atoms, the hydrocarbon or heterohydrocarbon radical being unsubstituted or substituted by 1 to 3 of the groups C₁-C₆-alkyl, trifluoromethyl, C₁-C₆-alkoxy, trifluoromethoxy, (C₁-C₄-alkyl)₂amino, (C₆H₅)₃Si, (C₁-C₁₂-alkyl)₃Si and/or halogen,
and
R"₄ is methyl or phenyl.

13. Metal complexes of transition metals of the transition groups of the Periodic Table of the Elements with a compound of the formula (1 a) or (1 b) as a ligand.

14. Process for preparing chiral organic compounds by asymmetric addition of hydrogen to a carbon or carbon-heteroatom double bond in prochiral organic compounds in the presence of a catalyst, which is **characterized in that** the addition is performed in the presence of catalytic amounts of at least one metal complex according to Claim 13.

15. Use of the metal complexes according to Claim 13 as homogeneous catalysts for preparing chiral organic compounds by asymmetric addition of hydrogen to a carbon or carbon-heteroatom double bond in prochiral organic compounds.
